# EUROPEAN PATENT SPECIFICATION

(11) **EP 3 193 591 B1**
(45) Date of publication and mention of the grant of the patent: **19.09.2018**
(21) Application number: 16705458.4
(22) Date of filing: 09.02.2016
(51) Int. Cl.: A01K 27/00, F16B 45/02

(54) **AUTOMATIC SAFETY SPRING CLIP WITH RAPID COUPLING AND RELEASE**
AUTOMATISCHE SICHERHEITSFEDERKLAMMER MIT SCHNELL ANBRINGBARER UND LÖSBARER KUPPLUNG
PINCE À RESSORT DE SÉCURITÉ AUTOMATIQUE À ACCOUPLEMENT ET À LIBÉRATION RAPIDES

(30) Priority: 08.05.2015 IT VR20150077
(43) Date of publication of application: 26.07.2017
(73) Proprietor: Ferplast SpA, 36070 Castelgomberto (VI) (IT)
(72) Inventor: VACCARI, Carlo, 36070 Castelgomberto (Vicenza) (IT)
(74) Representative: Sandri, Sandro
(86) International application number: PCT/EP2016/052721
(87) International publication number: WO 2016/180545

(56) References cited:
- WO-A1-2014/177130
- US-A1- 2004 208 692

## Description

### TECHNICAL FIELD

This invention relates to an automatic safety spring clip with rapid coupling and release.

More specifically, the invention relates to an automatic safety spring clip with small dimensions which is easy to use during the coupling steps and at the same time safe to allow a facilitated fastening even under normally difficult conditions for the release, as in during the traction phase.

Compared with prior art solutions, the spring clip according to the invention proposes to allow the rapid release even when the spring clip is in normally difficult conditions, such as those of traction in which it is normally difficult to act on the release means of the traditional spring clips.

This invention can be advantageously applied in the sector of accessories for pets, and, more specifically, in the field of retaining means for dogs or other similar pets, but may also be used in many other sectors such as, for example, in the sports, nautical or mountaineering sectors, or in that of packaging, or in all those applications which involve the use of ties, or the like.

### BACKGROUND ART

It is known that a spring clip, which may have different shapes and which is generally made of steel or lightweight alloys, consists of a substantially ringshaped body, if necessary shaped, having one side which can be opened by a lever positioned in contrast with a spring, if necessary which can be locked by a ring nut.

The spring clip is normally used where it is necessary to join elements in a quick, safe and reusable manner, and for this reason it is often used for sports such as climbing, mountaineering, paragliding, caving or the like, but also for uses, such as for example, for attaching the leash to the collar or to the harness of pets.

Again in the case of pets, it is also known that the traditional leash comprises a rope or a belt with a length suitable for the size of the animal, or in some cases extendable, equipped at one end with a grip which allows it to be gripped by the owner and at the other end with a spring clip for attaching it to the collar or harness.

In any case, the spring clip generally consists of a substantially annular body having a first longitudinal end provided with a ring for fixed connection with the leash, and a second hook-shaped end or hook which can be closed by a pin slidable in an axial direction in order to attach to the object to be retained, such as the ring of the collar, or other element.

The pin has elastic loading means designed to hold it in the closed position so that in order to release the spring clip from the collar it is necessary to grip the relative central body with one hand and exert an action with the thumb of the other hand on the pin aimed at opening the coupling means.

The same operations are however essential for coupling the spring clip to the collar, requiring a certain care in it execution by the user.

A first drawback has been found in the sector of leashes for pets and relates to the fact that traditional spring clips, which are generally large in size in order to facilitate the use, have problems regarding the pulling of the animal, especially in the case in which the animal realises it is about to be released.

In effect, in these cases the releasing of the spring clip is often difficult as a result of the fact that the animal, feeling that it is about to be freed, starts to "pull" and tends to make sudden movements which hinder the release action by the owner. The traditional spring clips, due to their typical hook shape, force the owner of the dog to perform difficult operations for retaining and slackening the tension of the leash, thus allowing the release of the hook, which would otherwise not be possible.

Another drawback found by the operators in the "pet comfort" sector is represented by the fact that during the coupling of the traditional spring clip to the collar of the animal it is necessary to manually open the closing pin of the hook with inevitable retaining of the pet's collar.

Also in this case it is not easy to control since the animal tends to move both when it is freed and when it is about to be attached to the leash.

Document US 2004/0208692 A1 discloses a coupling device for engagement with an anchor member. The coupling device includes a lever that moves between a closed position that substantially covers the mouth of the device and an open position in which the mouth is substantially uncovered by the lever. The lever may be moved to the open position by camming forces or by direct manipulation of a portion of the lever by a user.

### DESCRIPTION OF THE INVENTION

The aim of this invention is to provide a safety spring clip which is able eliminate or significantly reduce the above-mentioned drawbacks.

The aim of this invention is also to provides a self locking spring clip which is simple to produce and, at the same time, simple and safe to use, thus obtaining a finished product of high quality and of significant interest for the customer.

This is achieved by means of a spring clip whose features are described in the main claim.

The dependent claims of the solution according to this invention describe advantageous embodiments of the invention.

According to the invention, the spring clip is provided with at least one button, typically two buttons but this depends on the configuration, acting on which the spring clip immediately frees the ring to which it is coupled, even during tension.

The spring clip according to the invention is made in two versions, a first version without a safety device, also called "lock", and a second version with the lock.

The operating principle is such that there are elastic means in the version with the lock. According to an embodiment of the invention there are two springs, one for the lock, and one for the button, the latter with the function of holding the product normally closed, and, in this case, for the coupling the user must simultaneously press the button and the lock (thereby opposing the respective springs) and the same action must be performed for the release. According to a further embodiment of the invention, the elastic means consist of extensions provided in the body made of plastic material of at least one component of the spring clip according to the invention.

In the version without the lock there are single elastic means, advantageously a single torsion spring, linked to the button, and, compared with the version with the lock, this configuration has the advantage of allowing the production of a more compact and more economical product since it eliminate two components.

### DESCRIPTION OF THE DRAWINGS

Other features and advantages of the invention will become clear on reading the description given below of one embodiment, provided as a non-limiting example, with the help of the accompanying drawings, in which:
- Figures 1 and 2 are schematic front views highlighting a spring clip according to the invention in the version without the lock, respectively in the closed and open position;
- Figure 3 is a side view of the spring clip of Figures 1 and 2;
- Figures 4 and 5 are cross sections through the line A-A of Figure 3 of the spring clip of Figures 1 and 2;
- Figure 6 is a side view of the spring clip of Figures 1 and 2;
- Figures 7 and 8 are cross sections through the line B-B of Figure 6 of the spring clip of Figures 1 and 2;
- Figures 9 and 10 are two schematic perspective views of the spring clip of Figures 1 and 2;
- Figures 11 and 12 are schematic front views highlighting a spring clip according to the invention in the version with the lock, respectively in the closed and open position;
- Figure 13 is a side view of the spring clip of Figures 11 and 12;
- Figures 14 and 15 are cross sections through the line A-A of Figure 13 of the spring clip of Figures 11 and 12;
- Figure 16 is a side view of the spring clip of Figures 1 and 2;
- Figures 17 and 18 are cross sections through the line B-B of Figure 16 of the spring clip of Figures 11 and 12;
- Figures 19 and 20 are two schematic perspective views of the spring clip of Figures 11 and 12.

### DESCRIPTION OF AN EMBODIMENT OF THE INVENTION

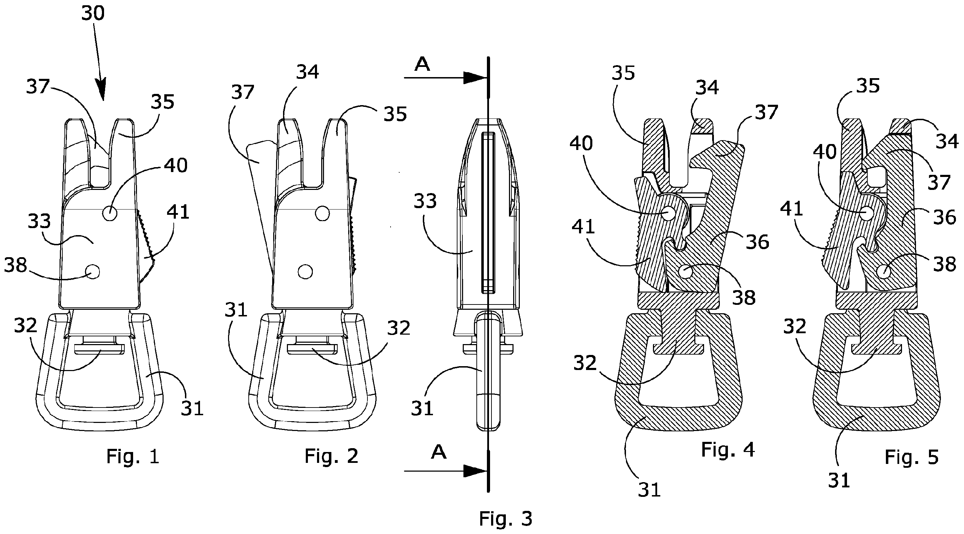

With reference to the accompanying drawings, and initially in particular to Figures 1 to 10, the numeral 30 indicates generally a spring clip according to the invention in its entirety to which a ring 31 is associated, positioned on the rear side opposite that of the body 33 of the spring clip, held to the spring clip by a pin 32 equipped with a large head.

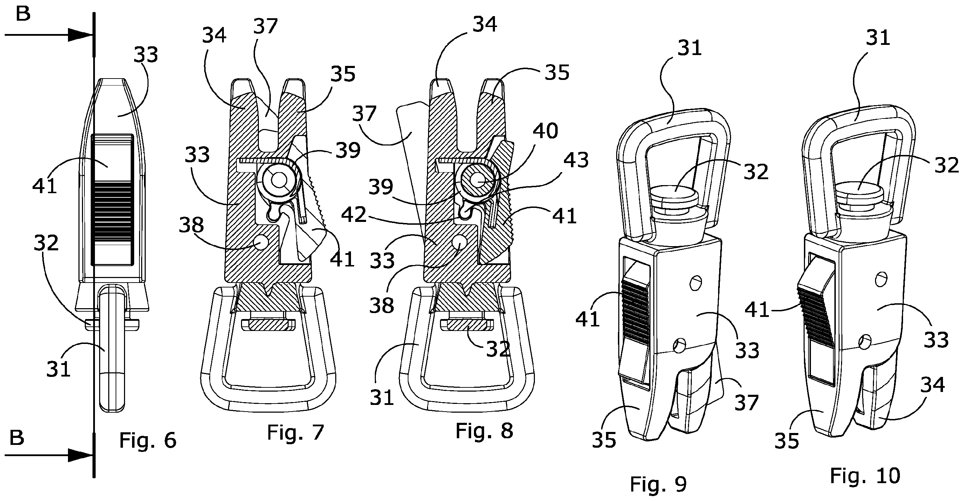

The spring clip 30 according to the invention, in the embodiment illustrated, substantially consists of four components mutually assembled together represented by:
- a main body 33 which on one side has the ring 31 connectable, for example, to the strap of a leash or to another element to be held, for example, with the hands, and on the other side of the ring 31 it has a fork-shaped "invite" area defined by appendices 34 and 35 which allows the rapid centring of the spring clip with the object to be coupled;
- a first element 36, one end of which is shaped like a hook 37 which interferes in the "invite" area of the main body, the first element being mobile and rotating around a pin 38 restrained to the main body 33, the first element 36 being equipped with a housing 42 (see Figure 8) in proximity to the pin 38;
- a second element 41, or operating button, opposite the pervious element with respect to the longitudinal centreline of the main body 33, mobile and rotating around a second pin 40 restrained to the main body 33 of the spring clip, provided with a mechanical profile consisting of a tooth 43 (see Figure 8) which interacts with the housing 42 of the first element hooking 36, in order to move the latter from an open position to a closed position and vice versa, the second element thus taking on the role of a lever control with respect to the first element.

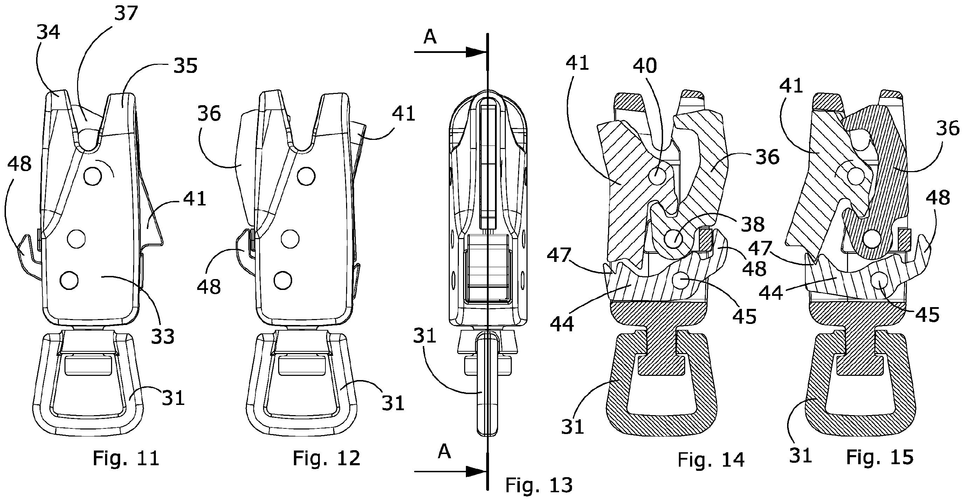

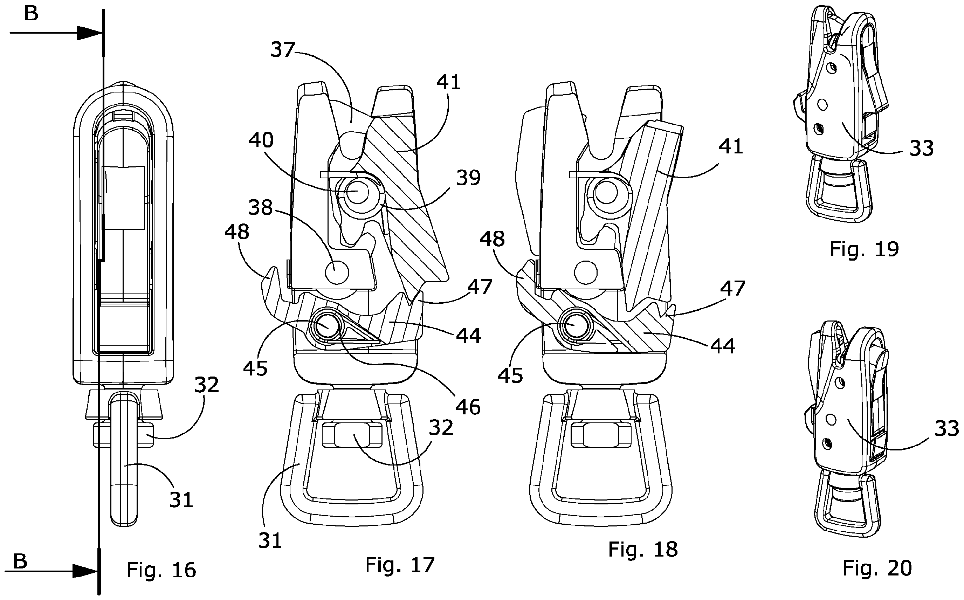

According to another embodiment illustrated in Figures 11 to 20, the spring clip described comprises a third articulated element of the lever type 44, which performs safety means functions, which is movable rotatably about a pin 45 and positioned in elastic contrast, more specifically against a spring 46 at the base of the two preceding elements 36, 41, so as to interfere with both, the lever being provided on one side with a shaped end 47 and on the other side with an element 48 for gripping with the fingers, the third lever element 44 constituting the element for locking the spring clip in the closed position and which is operated like a control knob to allow the opening of the spring clip.

According to a further embodiment, not illustrated in the drawings, the means for forming the elastic contrast comprise an elongate elastic protuberance of the third articulated element 44, an end of which rests on a supporting surface of the main body 33.

Along the outer edge of the second element 41, hinged on the pin 40, there is a knurled surface which acts as a gripping and pushing element for the fingers, allowing the angular movement in one direction or the other of the first element 36 on the pin 38, in order to move from a closed position to an open position and vice versa due to the action of the tooth 43 inside the housing 42.

From an operational point of view, the spring clip according to this invention makes it possible to retain inside the seat defined by the hook 36 inside the fork-shaped invite, the element to be held, which typically comprises a ring which may be made both of a metallic material and also of another non-metallic material.

In the version without the lock and starting from the open position shown in Figures 2, 4, 8, 9, 12, 14, 18 and 20, the spring clip is pushed towards the ring in such a way that this is inserted in the seat defined by the hook 36 inside the fork-shaped invite, and once the ring has reached the bottom of the fork, acting on the part of the button facing the outside of the pin 40 of the second component 41, the tooth 43 is rotated, which by pushing in the seat 42, causes the angular movement of the first component 36 which, by turning on the pin 38, moves the hook 37 which reaches the position illustrated in Figures 1, 5, 10, 11, 13, 17 and 20, in which the hook 37 itself closes the seat inside the fork preventing the escape of the ring.

In order to open the spring clip one acts again on the button opposite to the previous action of the second component 41, that is to say, pressing on the knurled area, allowing the tooth 43 to perform the operation opposite to the previous operation on the seat 42, that is to say, the rotation of the first element 36 in the direction opposite the previous one which determines the opening of the hook 37, again freeing the seat of the fork, thus allowing the retaining element to be freed.

In the version with the lock shown in Figures 13 to 20, the behaviour of the spring clip is similar to the previous behaviour with the difference that instead of acting only on the button of the second body 41 with another finger it is also necessary to act on the articulated lever-type element 44, in particular by moving the gripping element 48 one releases or frees with the shaping 47 the base 41.

In effect, again in the version with the lock, during the closing of the spring clip the shaping 47 of the lever 44 locks the base of the second element 41 or operating button, whilst to perform the opening of the spring clip one acts with two fingers on two opposite points, on one side on the knurled protrusion of the body or button 41 and on the other side on the gripping element 48 of the safety lever 44, allowing the shaping 47 to free the button 41, which may be operated in such a way that the rotation in the opposite direction to the previous one determines the opening of the hook 37 again freeing the seat of the forks, thus allowing the retaining element to be freed.

As may be noted, the spring clip according to the invention, being manually operated both for closing and opening, allows the coupling and release operations to be performed relative to the element to be gripped even under difficult conditions, that is to say, for example even when it is necessary to couple a leash to the collar of an agitated dog or release it from the dog whilst it starts to pull, having understood that the owner is about to free it.

The invention as described above refers to a preferred embodiment. It is nevertheless clear that the invention is susceptible to numerous variations falling within the scope of the disclosure, in the context of technical equivalents.

## Claims

1. An automatic safety spring clip with rapid coupling and release consisting of a main body (33) which on one side presents means of fixing to a ring (31) connectable to a cable or a cord or similar and on the other side is equipped with a fork-shaped "invite" area defined by appendices (34, 35) which allow the rapid centring of the spring clip on the object to be coupled, **characterised in that** it comprises:
• a first element (36), one end of which is shaped like a hook (37) which interferes in the "invite" area of the main body, the first element being mobile and rotating around a pin (38) restrained to the main body (33); the first element (36) being equipped with a housing (42) in proximity to the pin (38);
• a second element (41), or operating button, opposite the pervious element with respect to the longitudinal centreline of the main body (33), mobile and rotating around a second pin (40) restrained to the main body (33), the second element being placed in elastic contrast (39) and provided with a mechanical profile consisting of a tooth (43) which interacts with the housing (42) of the first element (36) in order to move the latter from an open position to a closed position and vice versa, the second element thus taking on the role of a lever control with respect to the first element.

2. A spring clip according to claim 1, **characterised in that** it comprises a third articulated safety lever-type element (44), which is mobile and rotates around a pin (45) and is placed in contrast with elastic means (46) at the base of the two elements (33, 41) in order to interfere with both of them.

3. A spring clip according to claim 2, **characterised in that** the third articulated safety lever type element (44) is provided on one side with a shaped end (47) and on the other with an element (48) that can be gripped with the fingers, the third lever element consisting of an element for blocking the spring clip in a closed position and which must be operated like a control handle to allow opening of the spring clip.

4. A spring clip according to any of the foregoing claims, **characterised in that** the outer edge of the second element (41), hinged on the pin (40), has a knurled surface which acts as a gripping and pushing element for the fingers, allowing the angular movement in one direction or the other of the first element (36) on the pin (38), in order to move from a closed position to an open position and vice versa due to the action of the tooth (43) inside the housing (42).

5. A spring clip according to any of the foregoing claims, **characterised in that** the elastic means are represented by springs (39, 46).

6. A spring clip according to claim 2, **characterised in that** the elastic means (46) consist of an extended protuberance of the third element (44) which rests on a support element of the main body (33).

## Patentansprüche

1. Automatischer Sicherheitsfederclip mit Schnellkupplung und -freigabe, bestehend aus einem Hauptkörper (33), der auf einer Seite Mittel zum Befestigen an einem Ring (31) aufweist, der mit einem Kabel oder Gurt oder dergleichen verbindbar ist, und auf der anderen Seite mit einem gabelförmigen "Einladungsbereich" ausgestattet ist, der durch Ansätze (34, 35) definiert ist, welche das schnelle Zentrieren des Federclips an dem Gegenstand, der angekuppelt werden soll, ermöglichen, **dadurch gekennzeichnet, dass** er folgendes umfasst:
• ein erstes Element (36), von dem ein Ende wie ein Haken (37) geformt ist, der in den "Einladungsbereich" des Hauptkörpers eingreift, wobei das erste Element beweglich ist und um einen Stift (38) dreht, der am Hauptkörper (33) zurückgehalten ist; wobei das erste Element (36) mit einem Gehäuse (42) in der Nähe zum Stift (38) ausgestattet ist;
• ein zweites Element (41), oder ein Betriebsknopf, gegenüber dem vorherigen Element bezüglich der Längsmittellinie des Hauptkörpers (33), beweglich und drehend um einen zweiten Stift (40), der am Hauptkörper (33) zurückgehalten ist, wobei das zweite Element in elastischem Gegensatz (39) angeordnet ist und mit einem mechanischen Profil versehen ist, das aus einem Zahn (43) besteht, der mit dem Gehäuse (42) des ersten Elements (36) in Eingriff tritt, um letzteres aus einer offenen Position in eine geschlossene Position und umgekehrt zu bewegen, womit das zweite Element die Rolle einer Hebelsteuerung bezüglich des ersten Elements übernimmt.

2. Federclip nach Anspruch 1, **dadurch gekennzeichnet, dass** er ein drittes gelenkiges Sicherheitshebelelement (44) umfasst, das beweglich ist und um einen Stift (45) dreht und im Gegensatz mit elastischen Mitteln (46) an der Basis der zwei Elemente (33, 41) angeordnet ist, um mit beiden in Eingriff zu treten.

3. Federclip nach Anspruch 2, **dadurch gekennzeichnet, dass** das dritte gelenkige Sicherheitshebelelement (44) auf einer Seite mit einem geformten Ende (47) und auf der anderen mit einem Element (48) versehen ist, das mit den Fingern ergriffen werden kann, wobei das dritte Hebelelement aus einem Element zum Blockieren des Federclips in der geschlossenen Position besteht, und das wie ein Steuergriff betrieben werden muss, um die Öffnung des Federclips zu ermöglichen.

4. Federclip nach einem der vorhergehenden Ansprüche, **dadurch gekennzeichnet, dass** die Außenkante des zweiten Elements (41), das am Stift (40) angelenkt ist, eine gerändelte Oberfläche aufweist, die als Greif- und Schiebeelement für die Finger wirkt, wodurch die Winkelbewegung in einer Richtung oder der anderen des ersten Elements (36) am Stift (38) ermöglicht ist, um sich aus der geschlossenen Position in eine offene Position und umgekehrt aufgrund der Wirkung des Zahns (43) innerhalb des Gehäuses (42) zu bewegen.

5. Federclip nach einem der vorhergehenden Ansprüche, **dadurch gekennzeichnet, dass** die elastischen Mittel durch Federn (39, 46) dargestellt sind.

6. Federclip nach Anspruch 2, **dadurch gekennzeichnet, dass** die elastischen Mittel (46) aus einem erweiterten Vorsprung des dritten Elements (44) bestehen, der an einem Stützelement des Hauptkörpers (33) ruht.

## Revendications

1. Pince à ressort de sécurité automatique à accouplement et dégagement rapides, la pince à ressort étant constituée d'un corps principal (33) dont un côté présente des moyens de fixation à un anneau (31) pouvant être relié à un câble ou une corde ou similaire et qui est équipé de l'autre côté d'une zone « de réception » en forme de fourche définie par des appendices (34, 35) qui permettent le centrage rapide de la pince à ressort sur l'objet à accoupler, **caractérisée en ce qu'**elle comprend :
• un premier élément (36) dont une extrémité a la forme d'un crochet (37) qui interfère dans la zone « de réception » du corps principal, le premier élément étant mobile et rotatif autour d'un axe (38) retenu dans le corps principal (33) ; le premier élément (36) étant équipé d'un logement (42) à proximité de l'axe (38) ;
• un deuxième élément (41), ou bouton de commande, opposé à l'élément accessible par rapport à l'axe longitudinal du corps principal (33), mobile et rotatif autour d'un deuxième axe (40) retenu dans le corps principal (33), le deuxième élément étant placé en contraste élastique (39) et pourvu d'un profil mécanique constitué d'une dent (43) qui coopère avec le logement (42) du premier élément (36) pour déplacer ce dernier d'une position ouverte à une position fermée et vice versa, le deuxième élément jouant ainsi le rôle d'une commande à levier par rapport au premier élément.

2. Pince à ressort selon la revendication 1, **caractérisée en ce qu'**elle comprend un troisième élément articulé (44) de type levier de sécurité, mobile et rotatif autour d'un axe (45) et placé en contraste avec des moyens élastiques (46) à la base des deux éléments (33, 41) pour coopérer avec les deux.

3. Pince à ressort selon la revendication 2, **caractérisée en ce que** le troisième élément articulé (44) de type levier de sécurité est pourvu sur un côté d'une extrémité profilée (47) et de l'autre côté d'un élément (48) pouvant être saisi avec les doigts, le troisième élément de levier consistant en un élément pour bloquer la pince à ressort dans une position fermée, qui doit être actionné comme une poignée de commande pour permettre l'ouverture de la pince à ressort.

4. Pince à ressort selon l'une quelconque des revendications précédentes, **caractérisée en ce que** le bord extérieur du deuxième élément (41), articulé sur l'axe (40), possède une surface moletée qui sert d'élément de préhension et de poussée pour les doigts, ce qui permet le mouvement angulaire dans un sens ou dans l'autre du premier élément (36) sur l'axe (38), pour passer d'une position fermée à une position ouverte et vice versa du fait de l'action de la dent (43) à l'intérieur du logement (42).

5. Pince à ressort selon l'une quelconque des revendications précédentes, **caractérisée en ce que** les moyens élastiques sont représentés par des ressorts (39, 46).

6. Pince à ressort selon la revendication 2, **caractérisée en ce que** les moyens élastiques (46) consistent en une protubérance étendue du troisième élément (44), laquelle repose sur un élément de support du corps principal (33).
